# EUROPEAN PATENT SPECIFICATION

(11) **EP 3 023 665 B1**
(45) Date of publication and mention of the grant of the patent: **16.05.2018**
(21) Application number: 15003235.7
(22) Date of filing: 13.11.2015
(51) Int. Cl.: F16D 29/00, F16D 25/08, F16D 28/00, F16D 23/12, F16D 25/12

(54) **ELECTRO-MECHANICAL ACTUATORS**
ELEKTROMECHANISCHE AKTUATOREN
ACTIONNEURS ÉLECTROMÉCANIQUES

(30) Priority: 19.11.2014 GB 201420522
(43) Date of publication of application: 25.05.2016
(73) Proprietor: Raicam Clutch Limited, West Midlands B3 2AS (GB); AP Automotive Products Srl, 60030 Moie di Maiolati (IT)
(72) Inventor: Struve, Benjamin Chetwood, Kenilworth, Warwickshire CV8 2GN (GB); Russo, Amedeo, 60035 Jesi, Ancona (IT)
(74) Representative: Morrall, Roger

(56) References cited:
- EP-A1- 1 426 641
- DE-A1- 19 728 827
- GB-A- 2 309 761
- JP-A- H03 172 625
- JP-U- S63 152 026
- US-A1- 2006 042 905

## Description

This invention relates to electro-mechanical actuators and in particular to such actuators for operating a vehicle driveline clutch.

Whilst such actuators have been proposed in which the rotary motion of an electric motor is turned into a linear motion to operate the clutch, such actuators have not been completely satisfactory in operation and have required relatively powerful motors.

GB2309761A discloses an actuator in which an electric motor can operate a vehicle clutch via a screw and nut mechanism and in which a spring is provided which acts on the clutch operating mechanism so as to tend to always bias the clutch towards one position e.g. its open position. EP1426641 A1 discloses a clutch actuator in which power from an electric motor is transmitted to clutch operating member via the same pin as the force from a bias spring which acts on the operating member and can move over-centre. As the motor and spring act through the same pin the movement of the operating member by the electric motor cannot be controlled separately from the assistance provided by the bias spring.

It is an object of the present invention to provide an improved form of electro-mechanical actuator which overcomes the above problems.

Thus according to the present invention there is provided an electro-mechanical actuator comprising an electric motor, a member rotatable by the electric motor, a first pin and slot connection connecting the rotatable member with a pivoting rocker lever and a pivoting connection connecting the rocker lever or rotatable member with a linearly moveable operating member so that rotation of the rotatable member by the motor pivots the rocker lever and gives linear movement of the operating member between two end travel positions, and bias means operative on the rocker lever to assist the motor to move the operating member to one of its end travel positions, the actuator being characterised in that the line of action of the bias means acting on the rocker arm moves from one side of the axis of pivoting of the rocker arm to the other side of the axis of pivoting to hold the operating member in its other end travel position and in that the pivoting connection comprises a second pin and slot connection between the rocker lever and the linearly moveable member.

In an alternative arrangement in accordance with the present invention there is provided an electro-mechanical actuator comprising an electric motor, a member rotatable by the electric motor, a first pin and slot connection connecting the rotatable member with a pivoting rocker lever and a pivoting connection connecting the rocker lever or rotatable member with a linearly moveable operating member so that rotation of the rotatable member by the motor pivots the rocker lever and gives linear movement of the operating member between two end travel positions, and bias means operative on the rocker lever to assist the motor to move the operating member to one of its end travel positions, the actuator being characterised in that the line of action of the bias means acting on the rocker arm moves from one side of the axis of pivoting of the rocker arm to the other side of the axis of pivoting to hold the operating member in its other end travel position and in that the pivoting connection is between the rotatable member and the linearly moveable member. This connection can be a simple pin connection or a ball joint type connection.

When used to operate a vehicle driveline clutch, the operating member may be moveable between an extended end travel position in which the clutch is disengaged and its other retracted end travel position in which the clutch is engaged, the line of action of the bias means acting on the rocker arm moving from one side of the axis of pivoting of the rocker arm to the other side of the axis of pivoting when the clutch is in its engaged position so that the biasing means also holds the clutch in its engaged position.

This biasing arrangement enables the power of the motor to be reduced as the biasing means assists the motor to disengage the clutch. Also, by arranging the line of action of the bias means acting on the rocker arm to move from one side of the axis of pivoting of the rocker arm to the other side of the axis of pivoting when the clutch is in its engaged position, there is no motor power required to maintain the clutch engaged.

Alternatively, if the actuator is used to operate a clutch which is normally held open by its springing, the operating member may be moveable between an extended end travel position in which the clutch is engaged and its other retracted end travel position in which the clutch is disengaged, the line of action of the bias means acting on the rocker arm moving from one side of the axis of pivoting of the rocker arm to the other side of the axis of pivoting when the clutch is in its disengaged position so that the biasing means also holds the clutch in its disengaged position. Such open biased clutch arrangements are commonly used in so-called double clutch transmissions.

The motor may be provided with an output gear which meshes with teeth on an outer periphery of the rotatable member so that the rotation of the motor is geared down when it rotates the rotatable member. Typically this gear ration may be of the order of 1: 16.

The bias means may conveniently comprise one or more springs which act on a lever arm portion of the rocker lever. These springs may be coil springs which may be nested one within another.

The clutch operating member may be guided for linear sliding in a housing of the actuator. This linear guidance may also prevent twisting and/or tipping of the clutch operating member relative to the housing.

The actuator may also include a clutch wear compensation means which maintains the travel of the actuator substantially constant as the clutch wears. This wear compensation means may, for example, be hydraulic or mechanical.

The invention also provides a vehicle driveline clutch provided with an actuator as described above in which the bias force applied to the rocker lever opposes the release load of the clutch.

In such an arrangement the clutch release load is arranged to be sufficient to ensure that the clutch can always close when the motor is not operating.

One embodiment of the present invention will now be described with reference to and as shown in the accompanying drawings in which:-
Figure 1 shows a plan view of an actuator in accordance with the present invention for the operation of a vehicle driveline clutch with the top of its housing removed and with the actuator in the clutch engaged position;
Figure 2 shows the main components of the actuator linkage in their clutch engaged position;
Figure 3 shows the main components of the actuator linkage in their clutch disengaged position;
Figure 4 shows an exploded view of the components of the actuator of Figure 1;
Figure 5 shows a perspective view of the assembled actuator of Figure 1;
Figure 6 shows a perspective view of a clutch operating member used in the actuator of
Figure 1;

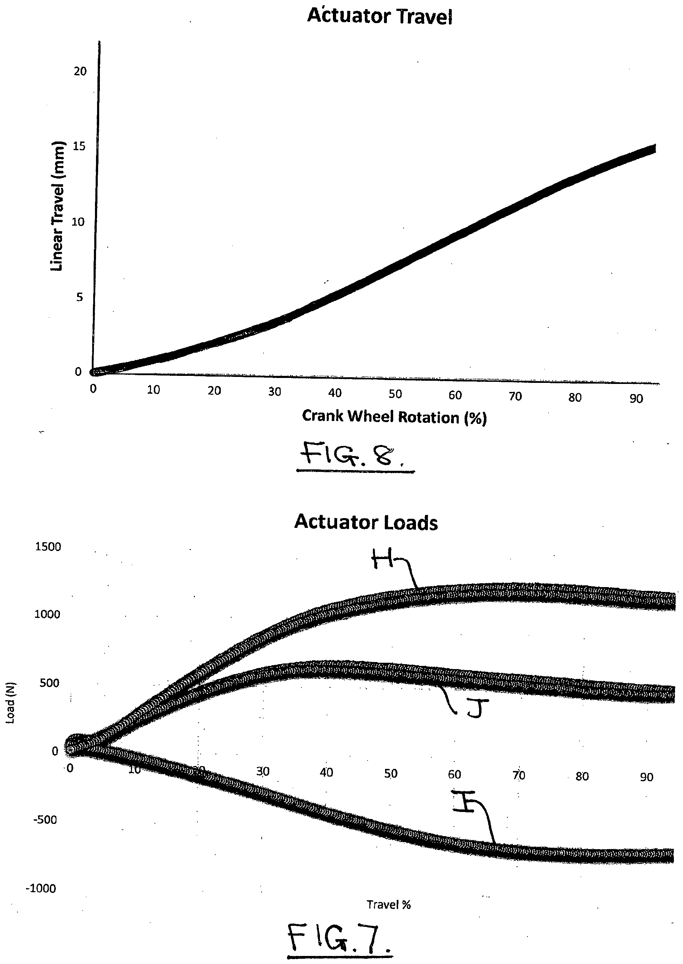

Figure 7 shows a graph of the clutch clamping force and the biasing force applied to the rocker lever and the resultant force which the motor must apply throughout it travel;
Figure 8 shows the linear travel characteristic provided by the actuator rocker lever linkage throughout its travel;

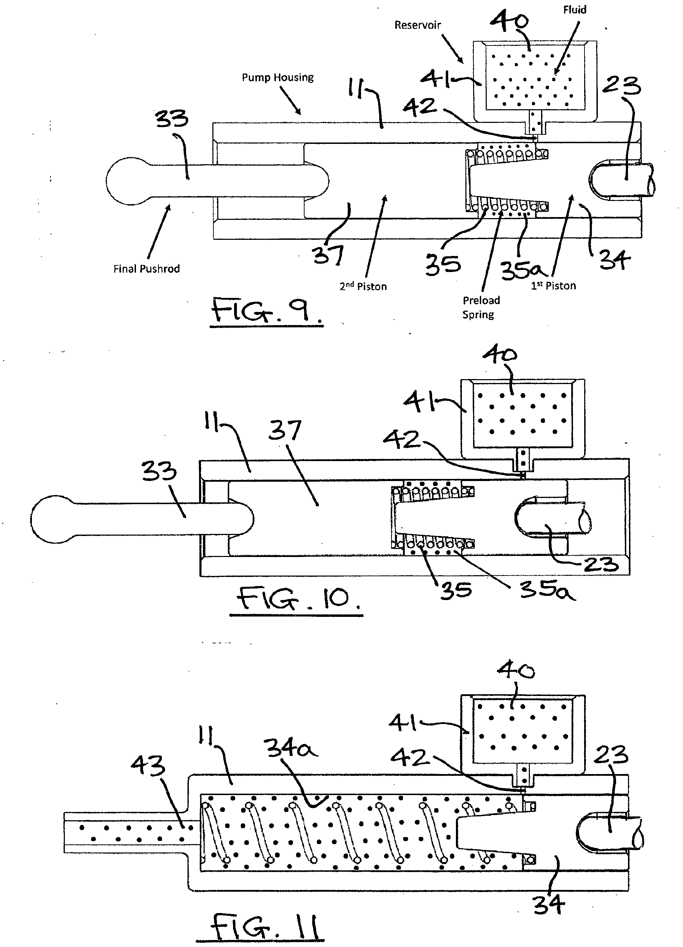

Figures 9 and 10 show schematic details of a hydraulic wear compensation means which may be used with the actuator;
Figure 11 shows schematically a hydraulic link between the actuator and the associated clutch, and

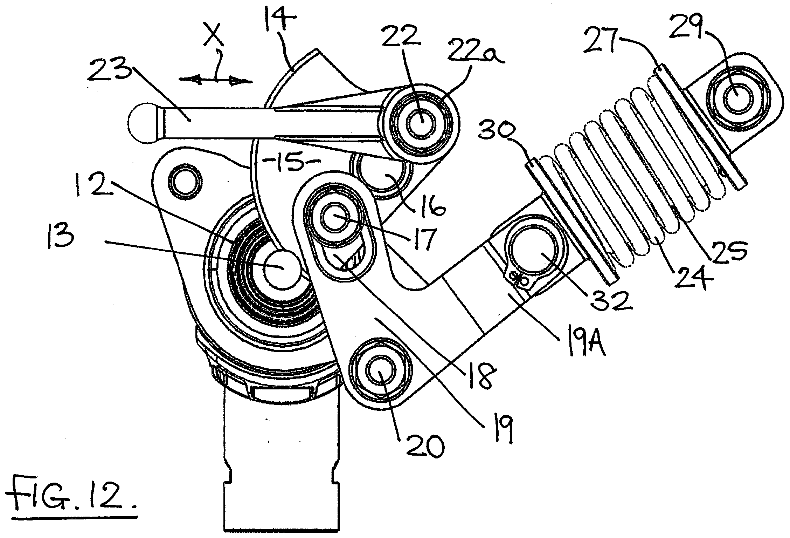

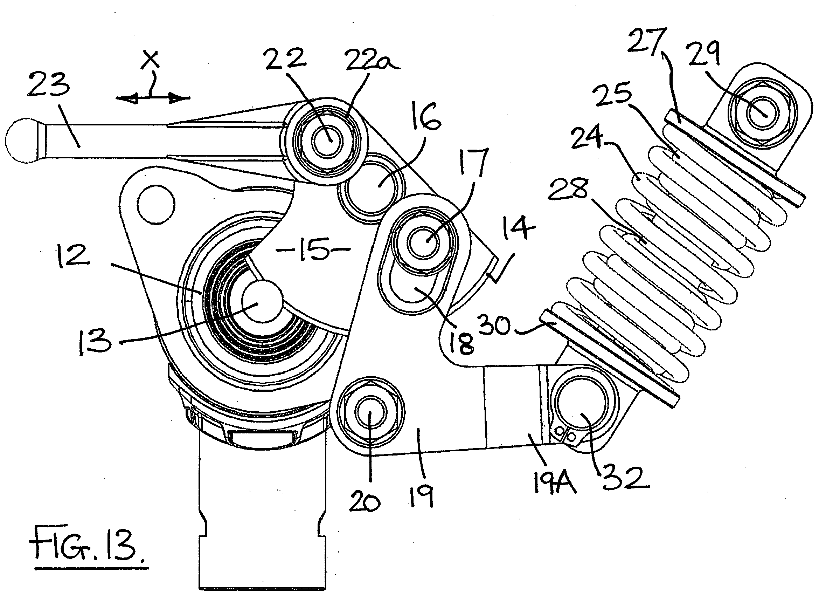

Figures 12 and 13 show a further form of actuator in accordance with the present invention in its clutch engaged and disengaged positions respectively.

Referring to the drawings, an actuator 10 in accordance with the present invention has a housing 11 on which a drive motor 12 is mounted by bolts 12a. Motor 12 has a toothed output shaft 13 which meshes with teeth 14 on an outer periphery of a rotatable quadrant-like member 15 which is rotatable relative to housing 11 on a shaft 16. Quadrant member 15 has a pin 17 which engages a slot 18 in a rocker lever 19 which is pivoted on the housing 11 on a shaft 20. A second slot 21 in rocker lever 19 engages a pin 22 provided on an operating member 23 which moves linearly relative to housing 11 (as indicated by Arrows X) on rotation on motor shaft 13.

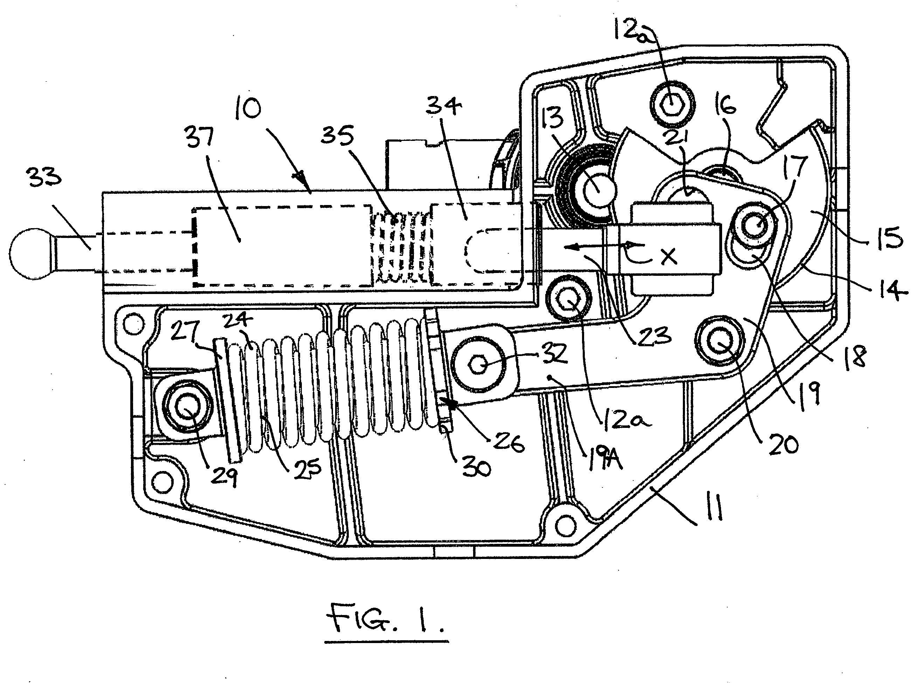

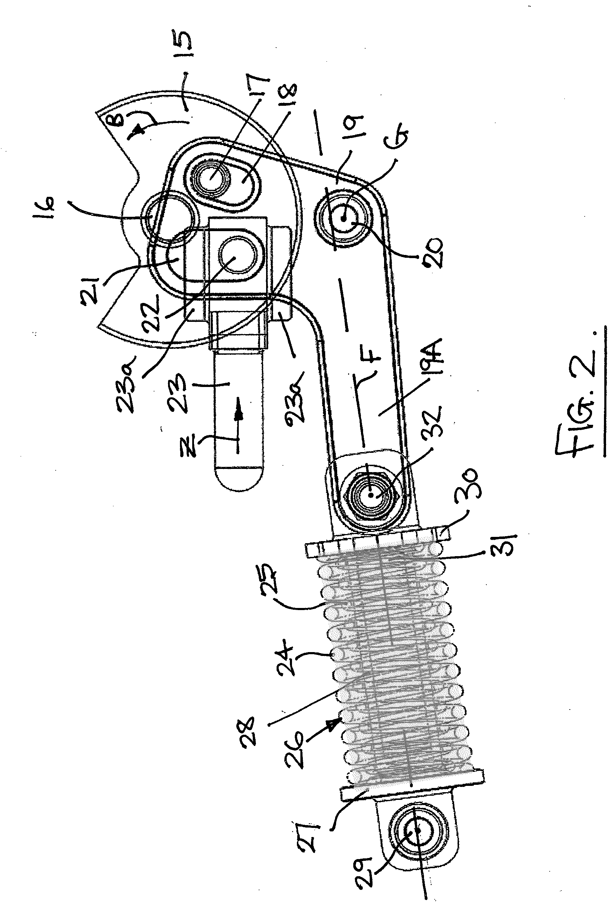

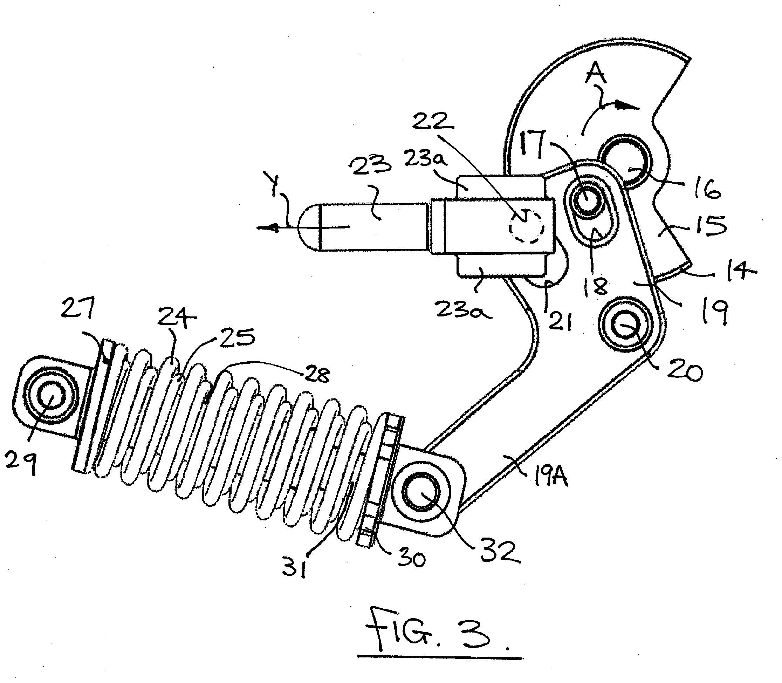

When used to operate a vehicle driveline clutch, the actuating member 23 moves between an extended end travel position, shown in Figure 3, in which the clutch is disengaged and its other retracted end travel position, shown in Figures 1 and 2, in which the clutch is engaged.

Biasing means in the form of coil springs 24 and 25 act on a lever arm portion 19A of rocker lever 19. Springs 24 and 25 are mounted on a carrier 26 which has an end abutment 27 carried on a tube 28 within the springs. Abutment 27 is pivotally mounted on housing 11 via bolt 29 and a second end abutment 30 which has a projection 31 slidable within tube 28 is pivotally attached to lever arm portion 19A by bolt 32. Thus, as will be understood, springs 24 and 25 bias abutment 30 away from abutment 27 so that a force is applied to lever arm 19A which varies as rocker arm 19 and carrier 26 pivot during use of the actuator.

As will be appreciated, the number and configuration of springs used to bias the rocker arm may vary according to the clutch release characteristics required in the vehicle in question.

Figure 3 shows the actuator linkage in its clutch release position in which the motor 11 is applying a clockwise force (arrow A) to quadrant member 15 so that operating member 23 is moved into its extended end travel position as indicated by arrow Y. During most of the movement of the operating member to its extended position the springs 24 and 25 also apply a force to rocker lever 19 which assists the motor to disengage the clutch.

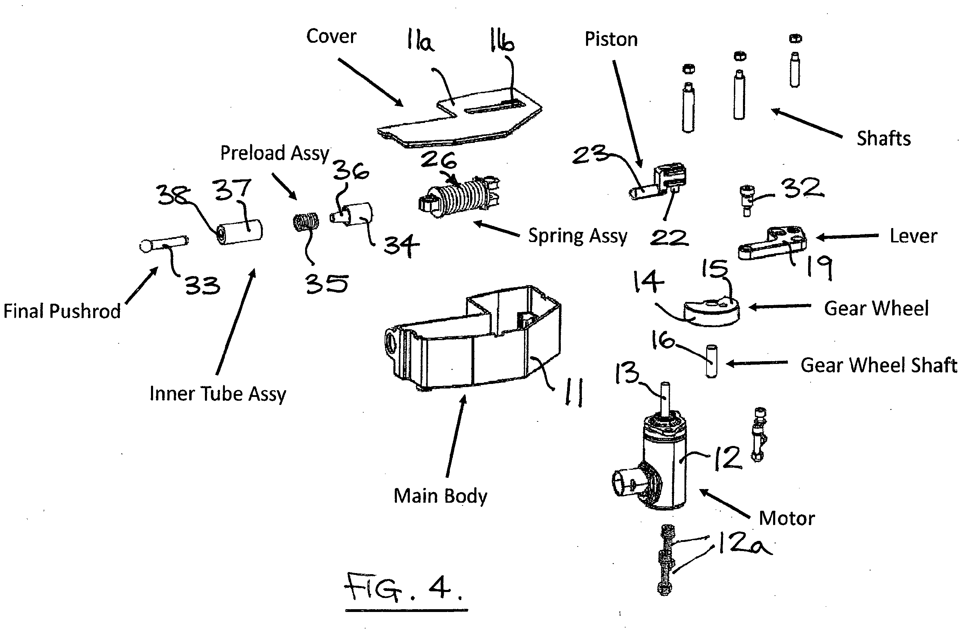

To engage the clutch quadrant member 15 is rotated anti-clockwise, as shown by arrow B in Figure 2, so that the operating member 23 moves in direction Z. As the clutch reaches its engaged position, shown in Figure 2, the line of action F of the bias springs 24 and 25 moves over-centre relative to the axis G of pivoting of the rocker arm 19. This means that in the engaged position of the springs 24 and 25 also hold the clutch in its engaged position ensuring that no motor power required to maintain the clutch closed. As best seen from Figures 1 and 4 the operating member 23 pushes a final push rod 33 via a receiving piston 34 within which operating member engages and also via a preload spring 35 which surrounds a nose 36 on piston 34. Spring 35 in turn engages within a hollow piston 37 having an end cup 38 which receives the final push rod 33. Preload spring 35 ensures that final push rod 33 is always in contact with the clutch operating lever (not Shown) which actually operates the clutch.

The operating member 23 is provided with one or more projections 23a which slide in grooves in the housing 11 and which prevent the twisting or tipping of the operating member relative to the housing during its linear motion.

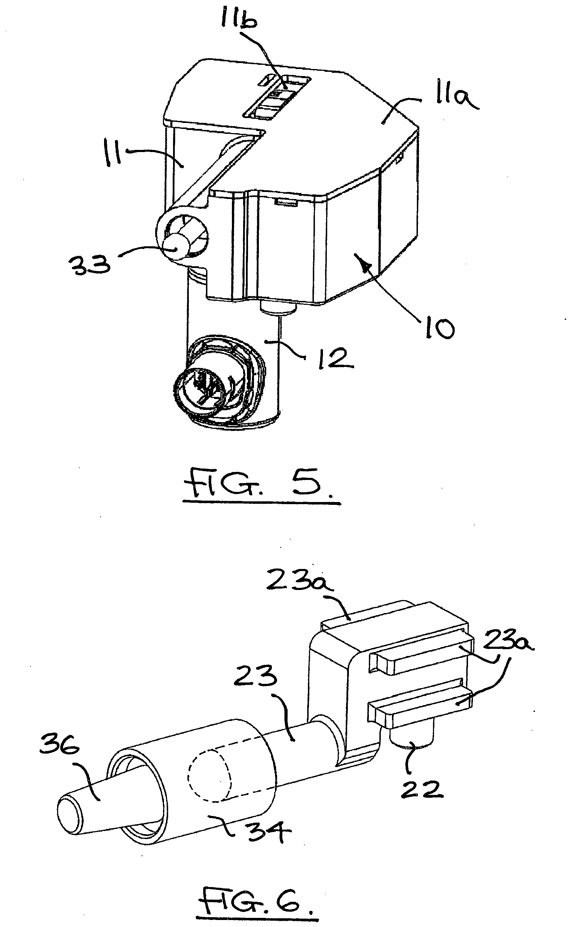

As visible in Figures 4 and 5 a cover 11a completes the housing 11. Cover 11a may include a slot 11b which severs as a window through which a position sensor (not shown) can sense the position of the operating member 23. This slot may be located elsewhere in the housing 11 if necessary.

Figure 7 shows graphically in curve H the variation of the clutch release force as the clutch is disengaged/engaged. Curve I shows the biasing force applied to the rocker lever by the springs 24 and 25 during disengagement/engagement and curve J shows the resultant force which the motor must apply throughout its travel.

Figure 8 shows the linear relationship between the motor angular travel and the pushrod linear travel throughout the actuator's range of movement. This linear relationship provides consistent and smooth operation of the clutch throughout its entire range of movement and helps positional control at the two extreme positions of travel.

The actuator may include a wear compensation means which maintains the travel of the actuator substantially constant as the clutch wears. Figures 9 and 10 show one form of hydraulic wear compensation means which could be used. In this arrangement, pistons 34 and 37 slide in a sealed contact with their guide bore and the space 35a between these pistons which is occupied by spring 35 is filled with hydraulic fluid 40 which can be supplied from a reservoir 41. via a port 42. When the actuator is in its fully retracted position, the port 42 is not covered by the piston 34(see Figure 9) and in this position fluid 40 can leave the space 35a and enter reservoir 41 via port 42 to compensate for any change in the travel of the actuating mechanism due to wear of the clutch. The fluid which leaves space 35a reduces the effective length of the clutch actuating mechanism to compensate for clutch wear.

When the actuator is operated to move piston 34 to the left as viewed in the drawings the port 42 is closed by piston 34 and the incompressible hydraulic fluid in space 35a transfers the movement directly from master piston 34 to slave piston 37.

Alternatively. a mechanical wear compensation means may be used in the clutch actuating mechanism which may, for example, use a one way ratchet system.

In the arrangement described above the final push rod 33 is described as operating directly on the clutch operating. It is possible, however for the actuator to operate on the clutch operating member via a hydraulic connection. Such an arrangement is shown in Figure 11 in which piston 34 operates as a master cylinder piston sliding in a bore 34a which has an outlet 43 connected with a slave cylinder (not shown) which operates the clutch operating lever. This arrangement is particularly advantageous where it is not possible to physically package the actuator in an appropriate position adjacent to the clutch operating member.

Figure 12 and 13 show an alternative form of actuator in accordance with the present invention in its clutch engaged and clutch disengaged positions respectively. In this form of actuator drive motor output shaft 13 meshes with teeth 14 on an outer periphery of rotatable quadrant-like member 15 which again rotatable relative to the housing of the unit on a shaft 16. Quadrant member 15 again has pin 17 which engages slot 18 in a rocker lever 19 which is pivoted on the housing on shaft 20. In this design pin 22 on quadrant member 15 extends through a roller bearing mounted in the end of operating member 23 which moves generally linearly relative to the unit housing (as indicated by Arrows X) on rotation on motor shaft 13. Pin connection 22 could be a ball joint connection if desired.

The actuating member 23 again moves between an extended end travel position, shown in Figure 13, in which the clutch is disengaged and its other retracted end travel position, shown in Figure 12, in which the clutch is engaged.

Biasing means in the form of coil springs 24 and 25 again act on a lever arm portion 19A of rocker lever 19. Springs 24 and 25 are mounted on carrier 26 which has end abutment 27 again carried on tube 28 within the springs. Abutment 27 is pivotally mounted on the housing via bolt 29 and a second end abutment 30 which has projection 31 slidable within tube 28 is pivotally attached to lever arm portion 19A by bolt 32.

Thus the arrangement shown in Figure 12 and 13 functions in a similar manner to that described above in relation to the previous construction so that springs 24 and 25 bias abutment 30 away from abutment 27 so that a force is applied to lever arm 19A which varies as rocker arm 19 and carrier 26 pivot during use of the actuator. Springs 24,25 thus again assist the motor 12 to disengage the clutch (see Figure 13) and also hold the clutch in its engaged position (see Figure 12) ensuring that no motor power required to maintain the clutch closed.

The present invention thus provides a safe actuator which in the case of motor of power failure always parks itself in the clutch closed position. Also the quadrant 15 only needs to rotate through 90 degrees (from the Figure 2 to the Figure 3 position) to achieve the required linear movement. This allows the use of a slower and thus cheaper motor. The provision of the bias assistance to disengage the clutch again allows the use of a less powerful motor and the geometry of the rocker lever and spring biasing ensures that the biasing also holds the clutch in its engaged position (when the clutch is biased to its engaged position) or to its released position (when the clutch is biased to its released position). The actuator also has a smaller number of parts compared to previous actuators which make it more economic to produce and also lighter.

## Claims

1. An electro-mechanical actuator (10) comprising an electric motor (12), a member (15) rotatable by the electric motor, a first pin and slot connection (17, 18) connecting the rotatable member with a pivoting rocker lever (19) and a pivoting connection (21, 22)connecting the rocker lever (19) or rotatable member (15) with a linearly moveable operating member (23) so that rotation of the rotatable member (15) by the motor (12) pivots the rocker lever and gives linear movement (X) of the operating member (23) between two end travel positions, and bias means (24, 25) operative on the rocker lever (19) to assist the motor (12) to move the operating member (23) to one of its end travel positions, the actuator being **characterised in that** the line of action (F) of the bias means (24, 25) acting on the rocker arm (19) moves from one side of the axis of pivoting (G) of the rocker arm (19) to the other side of the axis of pivoting to hold the operating member in its other end travel position and **in that** the pivoting connection comprises a second pin and slot connection (21, 22) between the rocker lever (19) and the linearly moveable member (23).

2. An electro-mechanical actuator (10) comprising an electric motor (12), a member (15) rotatable by the electric motor, a first pin and slot connection (17, 18) connecting the rotatable member with a pivoting rocker lever (19) and a pivoting connection (21, 22)connecting the rocker lever (19) or rotatable member (15) with a linearly moveable operating member (23) so that rotation of the rotatable member (15) by the motor (12) pivots the rocker lever and gives linear movement (X) of the operating member (23) between two end travel positions, and bias means (24, 25) operative on the rocker lever (19) to assist the motor (12) to move the operating member (23) to one of its end travel positions, the actuator being **characterised in that** the line of action (F) of the bias means (24, 25) acting on the rocker arm (19) moves from one side of the axis of pivoting (G) of the rocker arm (19) to the other side of the axis of pivoting to hold the operating member in its other end travel position and **in that** the pivoting connection (22) is between the rotatable member (15) and the linearly moveable member (23).

3. An actuator according to claim 1 or 2 for a vehicle driveline clutch **characterised in that** the operating member (23) may be moveable between an extended end travel position in which the clutch is disengaged and its other retracted end travel position in which the clutch is engaged, the line of action (F) of the bias means (24, 25) acting on the rocker arm (19) moving from one side of the axis of pivoting (G) of the rocker arm (19) to the other side of the axis of pivoting when the clutch is in its engaged position so that the biasing means also holds the clutch in its engaged position.

4. An actuator according to claim 1 or 2 for a vehicle driveline clutch **characterised in that** the operating member (23) may be moveable between an extended end travel position in which the clutch is engaged and its other retracted end travel position in which the clutch is disengaged, the line of action (F) of the bias means (24, 25) acting on the rocker arm (19) moving from one side of the axis of pivoting (G) of the rocker arm (19) to the other side of the axis of pivoting when the clutch is in its disengaged position so that the biasing means also holds the clutch in its disengaged position.

5. An actuator according to any one of claims 1 to 4 **characterised in that** the motor (12) may be provided with an output gear (13) which meshes with teeth (14) on an outer periphery of the rotatable member (15) so that the rotation of the motor is geared down when it rotates the rotatable member.

6. An actuator according to any one of claims 1 to 5 **characterised in that** the bias means comprise one or more springs (24,25) which act on a lever arm portion (19A) of the rocker lever (19).

7. An actuator according to claim 6 **characterised in that** the springs (24, 25) are coil springs nested one within another.

8. An actuator according to any one of claims 1 to 7 **characterised in that** the operating member (23) is guided (23a) for linear sliding in a housing (11) of the actuator.

9. An actuator according to claim 8 **characterised in that** the linear guidance (23a) may also prevents twisting and/or tipping of the operating member (23) relative to the housing (11).

10. An actuator according to any one of claims 1 to 9 for clutch operation which includes a clutch wear compensation means (34, 35, 37) which maintains the travel of the actuator substantially constant as the clutch wears.

11. A vehicle driveline clutch provided with an actuator in accordance with any one of claims 1 to 10 **characterised in that** the bias force (24, 25) applied to the rocker lever (19) opposes the release load of the clutch to ensure that the clutch can always close when the motor (12) is not operating.

12. A vehicle driveline clutch provided with an actuator in accordance with any one of claims 1 to 10 **characterised in that** the bias force (24, 25) applied to the rocker lever (19) assists the release load of the clutch to ensure that the clutch can always open when the motor (12) is not operating.

## Patentansprüche

1. Elektromechanischer Aktor (10), umfassend einen Elektromotor (12), ein durch den Elektromotor drehbares Element (15), eine erste Stift-und-Schlitz-Verbindung (17, 18), die das drehbare Element mit einem schwenkenden Kipphebel (19) verbindet, und eine Schwenkverbindung (21, 22), die den Kipphebel (19) oder das drehbare Element (15) mit einem linear bewegbaren Bedienelement (23) so verbindet, dass die Drehung des drehbaren Elements (15) durch den Motor (12) den Kipphebel schwenkt und eine lineare Bewegung (X) des Bedienelements (23) zwischen zwei Endstreckenpositionen bewirkt, und Vorspannmittel (24, 25), die auf den Kipphebel (19) einwirken, um den Motor (12) dabei zu unterstützen, das Bedienelement (23) zu einer seiner Endstreckenpositionen zu bewegen, wobei der Aktor **dadurch gekennzeichnet ist, dass** sich die Wirkungslinie (F) der Vorspannmittel (24, 25), die auf den Kipparm (19) wirken, von einer Seite der Schwenkachse (G) des Kipparms (19) zur anderen Seite der Schwenkachse verlagert, um das Bedienelement in seiner anderen Endstreckenposition zu halten, und dass die Schwenkverbindung eine zweite Stift-und-Schlitz-Verbindung (21, 22) zwischen dem Kipphebel (19) und dem linear bewegbaren Element (23) umfasst.

2. Elektromechanischer Aktor (10), umfassend einen Elektromotor (12), ein durch den Elektromotor drehbares Element (15), eine erste Stift-und-Schlitz-Verbindung (17, 18), die das drehbare Element mit einem schwenkenden Kipphebel (19) verbindet, und eine Schwenkverbindung (21, 22), die den Kipphebel (19) oder das drehbare Element (15) mit einem linear bewegbaren Bedienelement (23) so verbindet, dass die Drehung des drehbaren Elements (15) durch den Motor (12) den Kipphebel schwenkt und eine lineare Bewegung (X) des Bedienelements (23) zwischen zwei Endstreckenpositionen bewirkt, und Vorspannmittel (24, 25), die auf den Kipphebel (19) einwirken, um den Motor (12) dabei zu unterstützen, das Bedienelement (23) zu einer seiner Endstreckenpositionen zu verschieben, wobei der Aktor **dadurch gekennzeichnet ist, dass** sich die Wirkungslinie (F) der Vorspannmittel (24, 25), die auf den Kipparm (19) wirken, von einer Seite der Schwenkachse (G) des Kipparms (19) zur anderen Seite der Schwenkachse verlagert, um das Bedienelement in seiner anderen Endstreckenposition zu halten, und dass die Schwenkverbindung (22) zwischen dem drehbaren Element (15) und dem linear bewegbaren Element (23) liegt.

3. Aktor nach Anspruch 1 oder 2 für eine Antriebsstrang-Kupplung eines Fahrzeugs, **dadurch gekennzeichnet, dass** das Bedienelement (23) zwischen einer ausgefahrenen Endstreckenposition, in der die Kupplung ausgerückt ist, und seiner anderen eingefahrenen Endstreckenposition bewegbar ist, in der die Kupplung eingerückt ist, wobei die Wirkungslinie (F) der Vorspannmittel (24, 25), die auf den Kipparm (19) einwirken, von einer Seite der Schwenkachse (G) des Kipparms (19) zur anderen Seite der Schwenkachse verläuft, wenn sich die Kupplung in ihrer eingerückten Position befindet, so dass die Vorspannmittel auch die Kupplung in ihrer eingerückten Position halten.

4. Aktor nach Anspruch 1 oder 2 für eine Antriebsstrang-Kupplung eines Fahrzeugs, **dadurch gekennzeichnet, dass** das Bedienelement (23) zwischen einer ausgefahrenen Endstreckenposition, in der die Kupplung eingerückt ist, und seiner anderen eingefahrenen Endstreckenposition bewegbar ist, in der die Kupplung ausgerückt ist, wobei die Wirkungslinie (F) der Vorspannmittel (24, 25), die auf den Kipparm (19) einwirken, von einer Seite der Schwenkachse (G) des Kipparms (19) zur anderen Seite der Schwenkachse verläuft, wenn sich die Kupplung in ihrer ausgerückten Position befindet, so dass die Vorspannmittel auch die Kupplung in ihrer ausgerückten Position halten.

5. Aktor nach einem der Ansprüche 1 bis 4, **dadurch gekennzeichnet, dass** der Motor (12) mit einem Abtriebszahnrad (13) ausgestattet sein kann, das mit Zähnen (14) an einem äußeren Umfang des drehbaren Elements (15) so eingreift, dass die Drehung des Motors gedrosselt wird, wenn er das drehbare Element dreht.

6. Aktor nach einem der Ansprüche 1 bis 5, **dadurch gekennzeichnet, dass** die Vorspannmittel eine oder mehrere Federn (24, 25) umfassen, die auf einen Hebelarmabschnitt (19A) des Kipphebels (19) einwirken.

7. Aktor nach Anspruch 6, **dadurch gekennzeichnet, dass** die Federn (24, 25) Spiralfedern sind, die ineinander verschachtelt sind.

8. Aktor nach einem der Ansprüche 1 bis 7, **dadurch gekennzeichnet, dass** das Bedienelement (23) zum linearen Gleiten in einem Gehäuse (11) des Aktors geführt wird.

9. Aktor nach Anspruch 8, **dadurch gekennzeichnet, dass** die lineare Führung (23a) auch ein Verdrehen und/oder Kippen des Bedienelements (23) relativ zum Gehäuse (11) verhindern kann.

10. Aktor nach einem der Ansprüche 1 bis 9 für einen Kupplungsbetrieb, der ein Kupplungsverschleißausgleichsmittel (34, 35, 37) aufweist, das die Strecke des Aktors mit dem Verschleiß der Kupplung im Wesentlichen konstant hält.

11. Antriebsstrang-Kupplung eines Fahrzeugs, die mit einem Aktor nach einem der Ansprüche 1 bis 10 ausgestattet ist, **dadurch gekennzeichnet, dass** die Vorspannkraft (24, 25), die an den Kipphebel (19) angelegt ist, entgegengesetzt zur Ausrückkraft der Kupplung ist, um sicherzustellen, dass die Kupplung immer schließen kann, wenn der Motor (12) nicht in Betrieb ist.

12. Antriebsstrang-Kupplung eines Fahrzeugs, die mit einem Aktor nach einem der Ansprüche 1 bis 10 ausgestattet ist, **dadurch gekennzeichnet, dass** die Vorspannkraft (24, 25), die an den Kipphebel (19) angelegt ist, die Ausrückkraft der Kupplung unterstützt, um sicherzustellen, dass die Kupplung immer öffnen kann, wenn der Motor (12) nicht in Betrieb ist.

## Revendications

1. Actionneur électromécanique (10) comprenant un moteur électrique (12), un élément (15) pouvant tourner grâce au moteur électrique, un premier raccordement à broche et à fente (17, 18) raccordant l'élément pouvant tourner avec un culbuteur pivotant (19) et un raccordement pivotant (21, 22) raccordant le culbuteur (19) ou l'élément pouvant tourner (15) avec un élément d'actionnement (23) mobile de manière linéaire de sorte que la rotation de l'élément pouvant tourner (15) grâce au moteur (12) fait pivoter le culbuteur et donne le mouvement linéaire (X) de l'élément d'actionnement (23) entre deux positions de fin de course, et des moyens de sollicitation (24, 25) opérationnels sur le culbuteur (19) pour aider le moteur (12) à déplacer l'élément d'actionnement (23) dans l'une de ses positions de fin de course, l'actionneur étant **caractérisé en ce que** la ligne d'action (F) des moyens de sollicitation (24, 25) agissant sur le culbuteur (19) se déplace d'un côté de l'axe de pivotement (G) du culbuteur (19) à l'autre côté de l'axe de pivotement pour maintenir l'élément d'actionnement dans son autre position de fin de course et **en ce que** le raccordement pivotant comprend un second raccordement à broche et à fente (21, 22) entre le culbuteur (19) et l'élément mobile de manière linéaire (23).

2. Actionneur électromécanique (10) comprenant un moteur électrique (12), un élément (15) pouvant tourner grâce au moteur électrique, un premier raccordement à broche et à fente (17, 18) raccordant l'élément pouvant tourner avec un culbuteur pivotant (19) et un raccordement pivotant (21, 22) raccordant le culbuteur (19) ou l'élément pouvant tourner (15) avec un élément d'actionnement (23) mobile de manière linéaire de sorte que la rotation de l'élément pouvant tourner (15) grâce au moteur (12) fait pivoter le culbuteur et donne le mouvement linéaire (X) de l'élément d'actionnement (23) entre deux positions de fin de course, et des moyens de sollicitation (24, 25) opérationnels sur le culbuteur (19) pour aider le moteur (12) à déplacer l'élément d'actionnement (23) dans l'une de ses deux positions de fin de course, l'actionneur étant **caractérisé en ce que** la ligne d'action (F) des moyens de sollicitation (24, 25) agissant sur le culbuteur (19) se déplace d'un côté de l'axe de pivotement (G) du culbuteur (19) à l'autre côté de l'axe de pivotement pour maintenir l'élément d'actionnement dans son autre position de fin de course et **en ce que** le raccordement pivotant (22) est entre l'élément pouvant tourner (15) et l'élément mobile de manière linéaire (23).

3. Actionneur selon la revendication 1 ou 2, pour un embrayage de transmission de véhicule **caractérisé en ce que** l'élément d'actionnement (23) peut être mobile entre une position de fin de course étendue dans laquelle l'embrayage est dégagé et son autre position de fin de course rétractée dans laquelle l'embrayage est mis en prise, la ligne d'action (F) des moyens de sollicitation (24, 25) agissant sur le culbuteur (19) se déplaçant d'un côté de l'axe de pivotement (G) du culbuteur (19) à l'autre côté de l'axe de pivotement lorsque l'embrayage est dans sa position mise en prise de sorte que les moyens de sollicitation maintiennent également l'embrayage dans sa position mise en prise.

4. Actionneur selon la revendication 1 ou 2, pour un embrayage de transmission de véhicule, **caractérisé en ce que** l'élément d'actionnement (23) peut être mobile entre une position de fin de course étendue dans laquelle l'embrayage est mis en prise et son autre position de fin de course rétractée dans laquelle l'embrayage est dégagé, la ligne d'action (F) des moyens de sollicitation (24, 25) agissant sur le culbuteur (19) se déplaçant d'un côté de l'axe de pivotement (G) du culbuteur (19) à l'autre côté de l'axe de pivotement lorsque l'embrayage est dans sa position dégagée de sorte que les moyens de sollicitation maintiennent également l'embrayage dans sa position dégagée.

5. Actionneur selon l'une quelconque des revendications 1 à 4, **caractérisé en ce que** le moteur (12) peut être prévu avec un engrenage de sortie (13) qui s'engrène avec des dents (14) sur une périphérie externe de l'élément pouvant tourner (15) de sorte que la rotation du moteur est réduite lorsqu'il fait tourner l'élément pouvant tourner.

6. Actionneur selon l'une quelconque des revendications 1 à 5, **caractérisé en ce que** les moyens de sollicitation comprennent un ou plusieurs ressorts (24, 25) qui agissent sur une partie de culbuteur (19A) du culbuteur (19).

7. Actionneur selon la revendication 6, **caractérisé en ce que** les ressorts (24, 25) sont des ressorts hélicoïdaux emboîtés les uns dans les autres.

8. Actionneur selon l'une quelconque des revendications 1 à 7, **caractérisé en ce que** l'élément d'actionnement (23) est guidé (23a) pour le coulissement linéaire dans un boîtier (11) de l'actionneur.

9. Actionneur selon la revendication 8, **caractérisé en ce que** le guidage linéaire (23a) peut également empêcher la torsion et/ou le renversement de l'élément d'actionnement (23) par rapport au boîtier (11).

10. Actionneur selon l'une quelconque des revendications 1 à 9, pour le fonctionnement de l'embrayage qui comprend des moyens de compensation d'usure d'embrayage (34, 35, 37) qui maintiennent le déplacement de l'actionneur sensiblement constant au fur et à mesure que l'embrayage s'use.

11. Embrayage de transmission de véhicule doté d'un actionneur selon l'une quelconque des revendications 1 à 10, **caractérisé en ce que** la force de sollicitation (24, 25) appliquée sur le culbuteur (19) oppose la charge de libération de l'embrayage pour garantir que l'embrayage peut toujours se fermer lorsque le moteur (12) ne fonctionne pas.

12. Embrayage de transmission de véhicule doté d'un actionneur selon l'une quelconque des revendications 1 à 10, **caractérisé en ce que** la force de sollicitation (24, 25) appliquée sur le culbuteur (19) aide la charge de libération de l'embrayage à garantir que l'embrayage peut toujours s'ouvrir lorsque le moteur (12) ne fonctionne pas.
